# EUROPEAN PATENT SPECIFICATION

(11) **EP 2 871 569 B1**
(45) Date of publication and mention of the grant of the patent: **01.05.2019**
(21) Application number: 13855130.4
(22) Date of filing: 05.07.2013
(51) Int. Cl.: G06F 3/0488

(54) **METHOD AND DEVICE FOR USER INTERFACE MANAGEMENT**
VERFAHREN UND VORRICHTUNG ZUR VERWALTUNG VON BENUTZERSCHNITTSTELLEN
MÉTHODE ET DISPOSITIF POUR UNE GESTION D'INTERFACE UTILISATEUR

(30) Priority: 16.11.2012 CN 201210465079
(43) Date of publication of application: 13.05.2015
(73) Proprietor: Xiaomi Inc., Beijing 100085 (CN)
(72) Inventor: WENG, Haibin, Beijing 100085 (CN); WANG, Bin, Beijing 100085 (CN); LIU, Daokuan, Beijing 100085 (CN)
(74) Representative: Robson, Aidan John
(86) International application number: PCT/CN2013/078896
(87) International publication number: WO 2014/075451

(56) References cited:
- EP-A2- 2 437 142
- EP-A2- 2 466 438
- CN-A- 101 763 219
- CN-A- 101 930 282
- CN-A- 102 298 502
- CN-A- 103 019 556
- US-A1- 2007 118 813
- US-A1- 2012 256 959

## Description

### TECHNICAL FIELD

This present disclosure generally relates to a user interface of an electronic device with a touch screen, particularly to method and device for managing user interface.

### BACKGROUND

An electronic device with a touch screen provides a user interface functioning as a media for users and the electronic device communicating to each other.

On the user interface, there are provided one or more soft keys, menus and shortcut icons of individual application programs. Limited by size of the touch screen, the user interface can be divided into multiple pages for display when there are plenty of contents to be displayed.

The electronic device detects a contact of a user with the user interface and responds to it. For example, when the user hopes to use a certain application program, he can contact an icon corresponding to the application program in the user interface. Then after the contact has been detected by the electronic device, it starts the corresponding application program. Also, for example, when the icon corresponding to an application program which the user hope to use is not displayed on the current page, sliding can be carried out on the touch screen. Then after the sliding contact has been detected by the electronic device, it displays contents of the next page of the current page on the user interface according to the sliding direction.

As there are more and more kinds of application programs, icons on the user interface reach dozens or even more sometimes, and the problem brought about from it is that: users often need to use different kinds of application programs in different cases, and when they need to use a certain application program, sometimes they have to spend a very long time to look for the icon of this application program on the user interface.

EP 2466438 A2 discloses a mobile terminal including a touch screen configured to display a user interface of a multi-layered structure. EP 2437142 A2 discloses a method of controlling a mobile terminal in which a 3D user interface is displayed including at least one portion of a stereoscopic structure on a touch-screen. US 2012/0256959 A1 discloses a method of controlling a mobile device having a touch sensitive display, including detecting contract with the touch-sensitive display to determine whether the detected contact corresponds to a predefined icon. CN 102298502 A discloses an electronic device with a touch screen device configured to display succeeding or preceding desktop screens.

US 2007/118813 A1 discloses a method for managing a user interface including deleting widgets displayed on a touch sensitive display. It further discloses a management window, wherein a delete button enables the user to delete the icon of an application program and also to uninstall the application program from the electronic device.

### SUMMARY OF THE INVENTION

Embodiments of the present disclosure provide method and device for managing user interface, which allow users to quickly find out a set of application programs of that kind necessary for current use through simple operations and simplify users' operation.

According to an aspect of the invention as set out in claim 1, there is provided a method for managing a user interface, comprising: detecting a contact with a touch screen; determining a predetermined gesture that matches the contact; if the touch matches with a predetermined layer changeover gesture, changing layers that are displayed on the user interface over, wherein, different layers comprise icons of application programs that are not all the same, the method further comprising: if the contact matches with a predetermined application program deletion gesture, deleting the icon of an application program corresponding to the contact in a layer currently displayed on the user interface; wherein: if the user interface is currently displaying a base layer, the step of deleting the icon of an application program comprises uninstalling the application program from the electronic device; and if the user interface is currently displaying an extended layer, the icon of the application program is deleted from the currently displayed extended layer, but the application program still exists in the electronic device.

The method may further comprise: if the user interface is currently displaying an extended layer, before the icon of the application program is deleted from the currently displayed extended layer, displaying a prompt to the user suggesting that the user can uninstall the application program or delete the icon of the application program, according to a selection of the user

The changeover of the layer that is displayed on the user interface comprises: displaying a list of selectable layers on the user interface; determining selection of one of the layers by the user; displaying the layer selected by the user on the user interface.

The changeover of the layer that is displayed on the user interface comprises: determining the next layer of the layer that is displayed currently on the user interface according to a set order; displaying the determined layer on the user interface.

Further, the layers include a base layer and extended layers, the base layer includes icons for all application programs, and different extended layers include icons of application programs of different kinds.

According to an embodiment of the disclosure, there is provided a method for managing a user interface, comprising: detecting a contact with a touch screen; determining a predetermined gesture that matches the contact; if the contact matches with a predetermined layer lock gesture, locking the layer currently displayed on the user interface, wherein, different layers comprise icons of application programs that are not all the same.

The layers comprise a base layer and extended layers, the base layer includes icons of all application programs, and different extended layers include icons of application programs of different kinds.

According to an embodiment of the disclosure, there is provided a method for managing a user interface, comprising: detecting a contact with a touch screen; determining a predetermined gesture that matches with the contact; if the contact matches with a predetermined application program deletion gesture, deleting the icon of an application program corresponding to the contact in the layer currently displayed on the user interface, wherein, different layers comprise icons of application programs that are not all the same.

The layers comprise a base layer and extended layers, the base layer includes icons of all application programs, and different extended layers include icons of application programs of different kinds.

Further, the deleting of the icon of the application program corresponding to the contact in the layer currently displayed on the user interface comprises: determining the type of the currently displayed layer on the user interface; if what is currently displayed on the user interface is a base layer, uninstalling the application program corresponding to the contact and deleting the icon of the application program corresponding to the contact from each layer; if what is currently displayed on the user interface is an extended layer, deleting the icon of the application program corresponding to the contact from the extended layer that is currently displayed on the user interface.

Further, if what is displayed on the user interface is an extended layer, a prompt for deletion mode is further displayed on the user interface firstly, and then according to the user's selection, the icon of the application program corresponding to the contact is deleted from the extended layer currently displayed on the user interface, or the application program corresponding to the contact is uninstalled and the icon of the application program corresponding to the contact is deleted from each layer.

According to an embodiment of the disclosure, there is provided a method for managing a user interface, comprising: detecting a contact with a touch screen; determining a predetermined gesture that matches with the contact; if the touch matches with a predetermined application program addition gesture, adding the icon of an application program to the layer currently displayed on the user interface, wherein, different layers comprise icons of application programs that are not all the same.

Adding of the icon of the application program to the layer currently displayed on the user interface comprises: displaying a list of selectable application programs on the user interface; determining the selection of one or more of the application programs by the user; adding the icon of the application program(s) selected by the user to the layer currently displayed on the user interface.

Further, the layers comprise a base layer and extended layers, the base layer includes icons of all application programs, and different extended layers include icons of application programs of different kinds.

According to an embodiment of the disclosure, there is provided a method for managing a user interface, comprising: detecting a contact with a touch screen; determining a predetermined gesture that matches with the contact; if the contact matches with a predetermined layer edit gesture, entering into a layer edit state; receiving an edit instruction inputted by a user in the edition state and performing an edit operation with respect to layers, wherein, different layers comprise icons of application programs that are not all the same.

The layers comprise a base layer and extended layers, the base layer comprises icons of all application programs, and different extended layers comprise icons of application programs of different kinds.

Further, the editing operation comprises at least one of adding an extended layer, deleting an extended layer, merging two or more extended layers, changing the name of an extended layer, changing the background of an extended layer and changing the icon style of an application program in an extended layer.

According to an embodiment of the disclosure, there is provided a method for managing a user interface, comprising: detecting a contact with a touch screen; determining a predetermined gesture that matches with the contact; if the contact matches with a predetermined layer changeover gesture, changing layers displayed on the user interface over; if the contact matches with a predetermined layer lock gesture, locking the layer currently displayed on the user interface; if the contact matches with a predetermined application program deletion gesture, deleting the icon of an application program corresponding to the contact in the layer currently displayed on the user interface; if the contact matches with a predetermined application program addition gesture, adding the icon of an application program to the layer currently displayed on the user interface; if the contact matches with a predetermined layer edit gesture, entering into a layer editing state, receiving an editing instruction inputted by a user in the edit state and performing an editing operation with respect to layers; wherein, different layers comprise icons of application programs that are not all the same.

The layers comprise a base layer and extended layers, the base layer includes icons of all application programs, and different extended layers include icons of application programs of different kinds.

According to an aspect of the invention as set out in claim 6, there is provided a device for managing a user interface, comprising: a detection module, used to detect a contact with a touch screen; a determination module, used to determine a gesture that matchs with the contact; a changeover module, used to change layers displayed on the user interface over when the contact matches with a predetermined layer changeover gesture, wherein, different layers include icons of application programs that are not all the same.

The changeover module comprises: a first processing sub-module, used to display a list of selectable layers on the user interface, and determine the selection of one of the layers by the user, when the contact matches with the predetermined layer changeover gesture; a first changeover execution sub-module, used to display the layer selected by the user on the user interface.

The changeover module comprises: a second processing sub-module, used to determine the next layer of the layer currently displayed on the user interface according to a set order when the contact matches with the predetermined layer changeover gesture; a second changeover execution sub-module, used to display the determined layer on the user interface.

Further, the layers comprise a base layer and extended layers, the base layer comprises icons of all application programs, and different extended layers comprise icons of application programs of different kinds.

According to an embodiment of the disclosure, there is provided a device for managing a user interface, comprising: a detection module, used to detect a contact with a touch screen; a determination module, used to determine a gesture that matches with the contact; a lock module, used to lock the layer currently displayed on the user interface when the contact matches with a predetermined layer lock gesture, wherein, different layers include icons of application programs that are not all the same; and a deletion module, configured to delete the icon of an application program corresponding to the contact in the currently displayed layer on the user interface if the contact matches with a predetermined application program deletion gesture; wherein: if the user interface is currently displaying a base layer, the deletion module is configured to uninstall the application program from the electronic device; and if the user interface is currently displaying an extended layer, the deletion module is configured to uninstall the icon of the application program is deleted from the currently displayed extended layer, the application program still existing in the electronic device.

If the user interface is currently displaying an extended layer, before the deletion module deletes the icon of the application program from the currently displayed extended layer, the device may be configured to display a prompt to the user suggesting that the user can uninstall the application program or delete the icon of the application program, according to a selection of the user.

The layers comprise a base layer and extended layers, the base layer comprises icons of all application programs, and different extended layers comprise icons of application programs of different kinds.

According to an embodiment of the disclosure, there is provided a device for managing a user interface, comprising: a detection module, used to detect a contact with a touch screen; a determination module, used to determine a gesture that matches with the contact; a deletion module, used to delete the icon of an application program corresponding to the contact in the layer currently displayed on the user interface when the contact matches with a predetermined application program deletion gesture, wherein, different layers include icons of application programs that are not all the same.

The layers comprise a base layer and extended layers, the base layer comprises icons of all application programs, and different extended layers comprise icons of application programs of different kinds.

Further, the deletion module comprises: a determination sub-module, used to determine the type of the layer currently displayed on the user interface; a deletion execution sub-module, used to uninstall an application program corresponding to the contact and delete the icon of the application program corresponding to the contact from each layer when what is currently displayed on the user interface is a base layer; and to delete the icon of an application program corresponding to the contact from the extended layer currently displayed on the user interface, when the type of the layer currently displayed on the user interface is an extended layer.

Further, the deletion execution sub-module is further configured to display, when what is displayed currently on the user interface is an extended layer, a prompt for deletion mode on the user interface firstly, and then according to the user's selection, delete the icon of the application program corresponding to the contact from the extended layer currently displayed on the user interface, or uninstall the application program corresponding to the contact and delete the icon of the application program corresponding to the contact from each layer.

According to an embodiment of the disclosure, there is provided a device for managing a user interface, comprising: a detection module, used to detect a contact with a touch screen; a determination module, used to determine a gesture that matches with the contact; an addition module, used to add the icon of an application program to a layer currently displayed on the user interface when the contact matches with a predetermined application program addition gesture, wherein, different layers comprise icons of application programs that are not all the same.

The addition module comprises: a display sub-module, used to display a list of selectable application programs on the user interface; an addition execution sub-module, used to acknowledge the selection of one or more of the application programs by the user and add the icon of the application program(s) selected by the user to the layer currently displayed on the user interface.

Further, the layers comprise a base layer and extended layers, the base layer comprises icons of all application programs, and different extended layers comprise icons of application programs of different kinds.

According to an embodiment of the disclosure, there is provided a device for managing a user interface, comprising: a detection module, used to detect a contact with a touch screen; a determination module, used to determine a gesture that matches with the contact; an edit module, used to control the user interface to enter into a layer edit state, receive an edit instruction inputted by the user in the edit state and perform an edit operation with respect to layers, when the contact matches with a predetermined layer edit gesture, wherein, different layers comprise icons of application programs that are not all the same.

The layers comprise a base layer and extended layers, the base layer comprises icons of all application programs, and different extended layers comprise icons of application programs of different kinds.

Further, the editing operation comprises at least one of adding an extended layer, deleting an extended layer, merging two or more extended layers, changing the name of an extended layer, changing background of an extended layer and changing the icon style of an application program.

According to an embodiment of the disclosure, there is provided a device for managing a user interface, comprising: a detection module, used to detect a contact with a touch screen; a determination module, used to determine a gesture that matches with the contact; a management module, used to change layers displayed on the user interface over when the contact matches with a predetermined layer changeover gesture; to lock the layer currently displayed on the user interface when the contact matches with a predetermined layer lock gesture; to delete the icon of an application program corresponding to the contact in the layer currently displayed on the user interface when the contact matches with a predetermined application program deletion gesture; to add the icon of an application program to the layer currently displayed on the user interface when the contact matches with a predetermined application program addition gesture; and to enter into a layer edit state, receive an edit instruction inputted by the user in the edit state and perform an edit operation with respect to layers when the contact matches with a predetermined layer edit gesture; wherein, different layers comprise icons of application programs that are not all the same.

The layers comprise a base layer and extended layers, the base layer comprises icons of all application programs, and different extended layers comprise icons of application programs of different kinds.

The technical schemes provided by the embodiments of the present disclosure have following beneficial effects:

The user interface can display different layers, and different layers include icons of application programs that are not all the same. Users can change the layer currently displayed on the user interface through performing a simple touch gesture on the touch screen, thereby quickly finding out the set of application programs needed to use currently. Thus, users' operation is simplified.

### BRIEF DESCRIPTION OF THE DRAWINGS

In order to explain the technical solutions in the embodiments of the disclosure more clearly, the accompanying drawings needed to be used for description of the embodiments of the disclosure will be briefly introduced. Obviously, the accompanying drawings described below only are some examples of the embodiments of the disclosure. For those ordinarily skilled in the art, they can obtain other accompanying drawings according to these ones on the premise that no creative work is paid.
Fig. 1 is a flow chart showing a display method of a user interface in Embodiment 1 of embodiments of the disclosure;
Fig. 2 is a schematic diagram illustrating a user interface displaying a layer list.
Fig. 3 is a flow chart showing a user interface management method in Embodiment 2 of the embodiments of the disclosure;
Fig. 4 is a diagram illustrating a user interface displaying a prompt for deletion mode .
Fig. 5 is a flow chart showing a user interface management method in Embodiment 3 of the embodiments of the disclosure;
Fig. 6 is a flow chart showing a user interface management method in Embodiment 4 of the embodiments of the disclosure;
Fig. 7 is a flow chart showing a user interface management method in Embodiment 5 of the embodiments of the disclosure;
Fig. 8 is a schematic diagram illustrating a user interface displaying a layer edit menu;
Fig. 9 is a schematic diagram illustrating a user interface displaying a setting dialog box of the extended layers;
Fig. 10 is a schematic diagram illustrating a user interface displaying a state of deleting extended layers.
Fig. 11 is a schematic diagram illustrating a user interface displaying a state of merging extended layers.
Fig. 12 is a structurally schematic diagram illustrating a user interface management device in Embodiment 6 of the embodiments of the disclosure;
Fig. 13 is a structurally schematic diagram illustrating a user interface management device in Embodiment 7 of the embodiments of the disclosure;
Fig. 14 is a structurally schematic diagram illustrating a user interface management device in Embodiment 8 of the embodiments of the disclosure;
Fig. 15 is a structurally schematic diagram illustrating a user interface management device in Embodiment 9 of the embodiments of the disclosure;
Fig. 16 is a structurally schematic diagram illustrating a user interface management device in Embodiment 10 of the embodiments of the disclosure;
Fig. 17 is a structurally schematic diagram illustrating a user interface management device in Embodiment 11 of the embodiments of the disclosure.

### DETAILED DESCRIPTION

In order to make the object, the technical schemes and the advantages of the embodiments of the present disclosure more clear, the exemplary embodiments will be further described in detail below in conjunction with the accompanying drawings.

### Embodiment 1

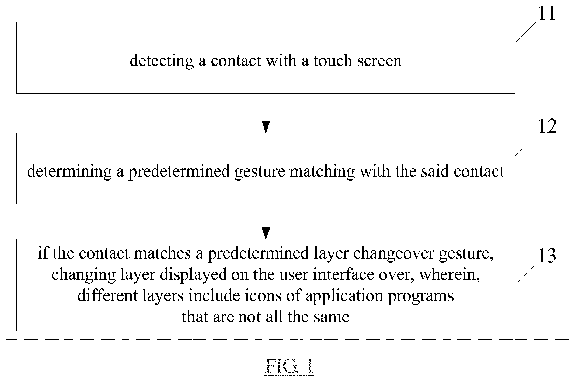

Fig. 1 is a flow chart of a user interface management method in Embodiment 1 of embodiments of the present disclosure. The method includes the following steps.

In step 11, a contact with a touch screen is detected.

In step 12, a predetermined gesture that matches with the contact is determined.

In step 13, if the contact matches with a predetermined layer changeover gesture, layers that are displayed on the user interface over are switched, wherein, different layers include icons of application programs that are not all the same.

As an optional implementation, the layers include a base layer and extended layers, the base layer includes icons of all application programs, and different extended layers include icons of application programs of different kinds. The kinds here are "no network", "working", "internet or web surfing", etc. which are user-defined, and names of these kinds can be used as theme names of these extended layers.

The predetermined layer changeover gesture is performing a two-point touch and longitudinal sliding on the touch panel, and when the contact detected in step 11 matches with this predetermined layer changeover gesture, changeover of layers that are displayed on the user interface is made.

Regarding the changeover operation, two implementations as follows exist.

The first implementation includes the following sub-steps.

In step 131, a list of selectable layers is displayed on the user interface.

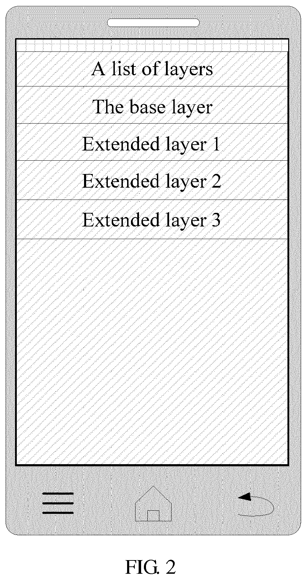

From the list of layers shown in Fig. 2, users can learn that all layers which can be selected currently include a base layer, an extended layer 1, an extended layer 2 and an extended layer 3. Here, with only the base layer and the extended layers as examples. In practical applications, theme names of the extended layers can be directly shown in the list of layers, for example, "no network theme layer" and "internet or web surfing theme layer" etc.

In step 132, the user's choice of one of the layers is acknowledged.

A user can select a layer to be changed to directly through a single-point touch. After this user's single-point touch has been detected, the user's selection of one layer is acknowledged.

In step 133, the layer selected by the user is displayed on the user interface.

For example, it is assumed that what is displayed currently on the user interface is a base layer, if users want to change to the extended layer 2, then it can be realized by performing a selection through step 131-step 133. A quick changeover can be achieved based on a simplified operation, and moreover, users need not to remember the category of icons of application programs included in each extended layer, and he can learn about it from the theme name of the extended layer in the list of layers, to thereby simplify user's operation further.

The second implementation includes the following sub-steps.

In step 131', according to a predetermined order, the next layer of the layer currently displayed on the user interface is determined.

The base layer is deemed as the first layer by default, and other extended layers are established one by one, which will be described in detail in the following embodiments. Therefore, the predetermined order here may be the order in which layers are established, and may also be other user-defined order.

In step 132', the determined layer is displayed on the user interface.

In this implementation, it is assumed that the establishment order of layers is: the base layer, the extended layer 1, the extended layer 2 and the extended layer 3, and what is displayed on the user interface currently is the extended layer 1, then the extended layer 2 is displayed on the user interface through step 131' and step 132'. If users hope to display the extended layer 3 on the user interface, then the users need to repeat steps 11-13 once.

### Embodiment 2

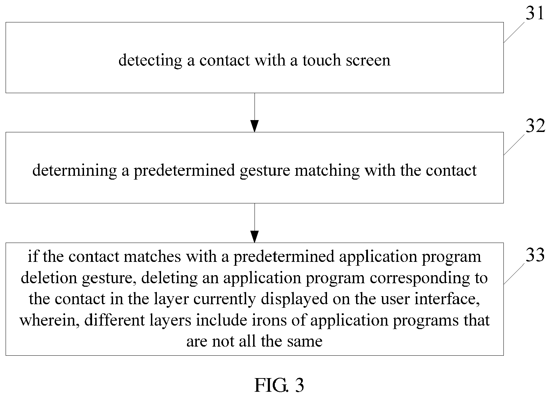

Fig. 3 is a flow chart of a user interface management method in Embodiment 2 of the embodiments of the disclosure. The flow process includes the following steps.

In step 31, a contact with a touch screen is detected.

In step 32, a predetermined gesture that matches with the contact is determined.

In step 33, if the contact matches with a predetermined application program deletion gesture, an application program corresponding to the contact in the layer currently displayed on the user interface is deleted, wherein, different layers include icons of application programs that are not all the same.

As an optional implementation, the layers include a base layer and extended layers, the base layer includes icons of all application programs, and different extended layers include icons of application programs of different kinds. The kinds here are "no network", "working" and "internet or web surfing" etc., which are user-defined.

The predetermined application program deletion gesture is performing a two-point touch and horizontal sliding towards the right on the touch screen, and at least one of two touch points needs to correspond with the application program to be deleted. When the detected contact in step 31 matches with the predetermined application program deletion gesture, the application program corresponding to the contact in the layer currently displayed on the user interface is deleted.

Specifically, when the detected contact matches with the predetermined application program deletion gesture, type of the layer currently displayed on the user interface is determined firstly. If what is currently displayed on the user interface is a base layer, an application program corresponding to the contact is uninstalled and the icon of the application program corresponding to the contact is deleted from each layer; if what is currently displayed on the user interface is an extended layer, the icon of an application program corresponding to the contact is deleted from the currently displayed extended layer.

It can be seen that in this embodiment, different ways to delete application programs are provided for the base layer and the extended layer, respectively. If what is currently displayed on the user interface is a base layer, then deleting of an application program is a "hard deletion", i.e. the application program is uninstalled from the electronic device, and accordingly, icon of the uninstalled application program is deleted from each layer. If what is currently displayed on the user interface is an extended layer, then deleting of an application program is a "soft deletion", i.e. icon of the application program is deleted from the currently displayed extended layer, but the application program still exists in the electronic device and its icon also can be displayed in other layers.

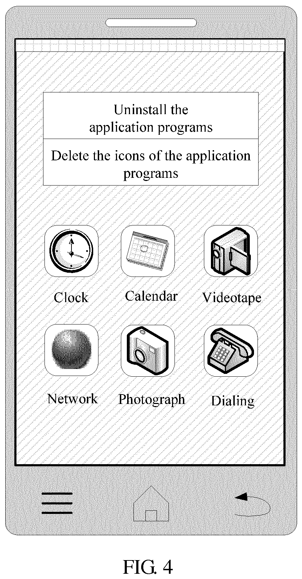

As an optional implementation for replacement, if what is currently displayed on the user interface is an extended layer, it may also be possible that a prompt for the deletion mode is displayed on the user interface firstly, so as to suggest to the user that he can uninstall application programs and also can only delete icons of the application programs in the currently displayed extended layer, as shown in fig. 4, and then according to the selection made by the user, the icons of the application programs are deleted from the currently displayed extended layer, or the application programs are uninstalled and the icons of the application programs corresponding to the contact are deleted from each layer. In this implementation, a function of "hard deletion" is also provided for extended layers, and operation is performed according to the user' choice, so that the operation mode is more flexible.

### Embodiment 3

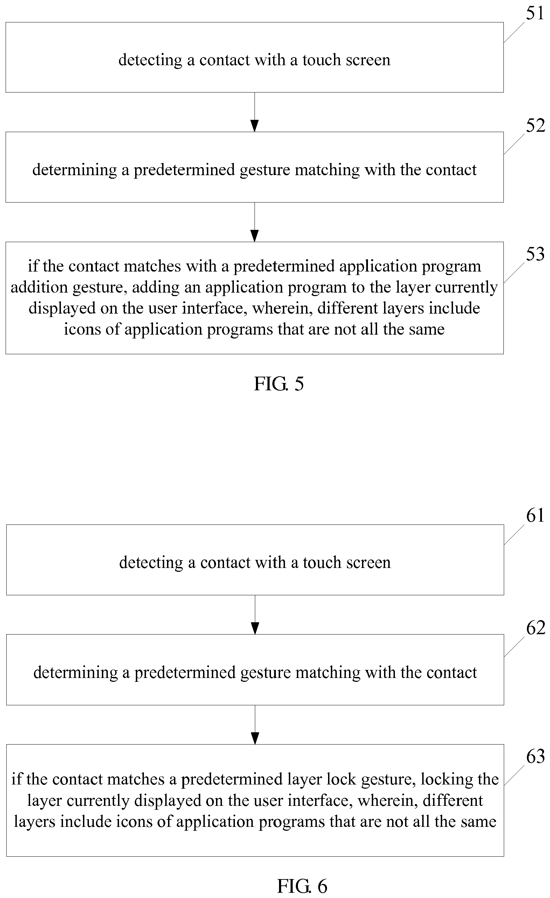

Fig. 5 is a flow chart of a user interface management method in Embodiment 3 of the embodiments of the disclosure. The flow process includes the following steps.

In step 51, a contact with a touch screen is detected.

In step 52, a predetermined gesture that matches with the contact is determined.

In step 53, if the contact matches with a predetermined application program addition gesture, an application program is added to the layer currently displayed on the user interface, wherein, different layers include icons of application programs that are not all the same.

As an optional implementation, the layers include a base layer and extended layers, the base layer includes icons of all application programs, and different extended layers include icons of application programs of different kinds. The kinds here are "no network", "working" and "internet or web surfing" etc. which are user-defined.

The predetermined application program addition gesture is performing a two-point touch and horizontal sliding to the left, and when the contact detected in step 51 matches with this predetermined application program addition gesture, application programs are added to the layer currently displayed on the user interface.

Specifically, when the detected contact matches with the predetermined application program addition gesture, a list of selectable application programs is displayed on the user interface firstly, the user's choice of one or more of these application programs is determined, and the application program(s) selected by the user is/are added to the layer currently displayed on the user interface.

As for this list of application programs here, based on the variation of the currently displayed layer, two cases as below may be possible.

Firstly, if what is currently displayed on the user interface is an extended layer, then all application programs that have been installed in the electronic device are included to the list of application programs.

Secondly, if what is currently displayed on the user interface is a base layer, then downloadable and installed application programs are included in the list of application programs. For example, dedicated application programs used to download application programs can be opened, and a list of the dedicated application programs is displayed on the user interface for user's selection.

The user can select an application program to be added through a single-point touch, and after this single-point touch has been detected, the selection of the application program by the user can be determined.

Accordingly, if what is currently displayed on the user interface is an extended layer, then the icon of the application program selected by the user is added to this extended layer. If what is currently displayed on the user interface is a base layer, then it is necessary that the application program selected by users be downloaded and installed, and the icon of the application program be added to the base layer.

### Embodiment 4

Fig. 6 is a flow chart of a user interface management method in Embodiment 4 of the embodiments of the disclosure. The flow process includes the following steps.

In step 61, a contact with a touch screen is detected.

In step 62, a predetermined gesture matching with the contact is determined.

In step 63, if the contact matches with a predetermined layer lock gesture, the layer currently displayed on the user interface is locked, wherein, different layers include icons of application programs that are not all the same.

As an optional implementation, the layers include a base layer and extended layers, the base layer includes icons of all application programs, and different extended layers include icons of application programs of different kinds. The kinds here are "no network", "working" and "internet or web surfing" etc. which are user-defined.

The predetermined layer locking gesture is performing a single-point touch and sliding to form a closed graph. When the detected contact in step 61 matches with the predetermined layer locking gesture, the layer currently displayed on the user interface is locked. After the locking, no response will be made to a layer changeover gesture until the user performs a layer unlocking gesture, and thereby, changeover of the displayed layer due to a misoperation can be prevented. Here, the layer unlocking gesture may be performing a single-point touch and sliding in the reverse direction to form a closed graph.

### Embodiment 5

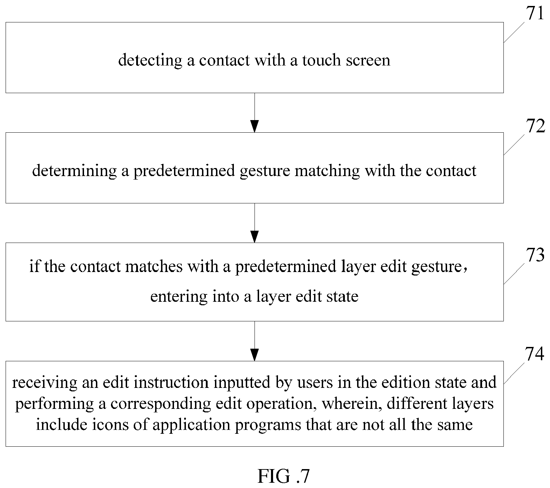

Fig. 7 is a flow chart of a user interface management method in Embodiment 5 of the embodiments of the disclosure. The method includes the following steps.

In step 71, a contact with a touch screen is detected.

In step 72, a predetermined gesture matching with the contact is determined.

In step 73, if the contact matches with a predetermined layer edit gesture, it enters into a layer edit state.

The predetermined layer edit gesture is performing a three-point touch and longitudinal sliding. If the detected contact in the step 71 matches with a predetermined extended layer edit gesture, it enters into a layer edit state.

In step 74, an edit instruction that is inputted by a user in the edit state is received, and a corresponding edit operation is performed, wherein, different layers include icons of application programs that are not all the same.

As an optional implementation, the layers include a base layer and extended layers, the base layer includes icons of all application programs, and different extended layers include icons of application programs of different kinds. The kinds here are "no network", "working" and "internet or web surfing" etc. which are user-defined.

After entrance into the layer edit state, the user can input all kinds of edit instructions, and some specific examples will be provided below.

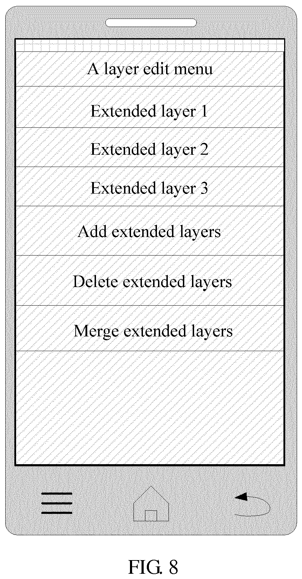

A layer edit menu is displayed on the user interface, as shown in Fig.8, and this menu includes a list of currently existing extended layers and options e.g. "adding extended layers", "merging extended layers" and "deleting extended layers" etc.

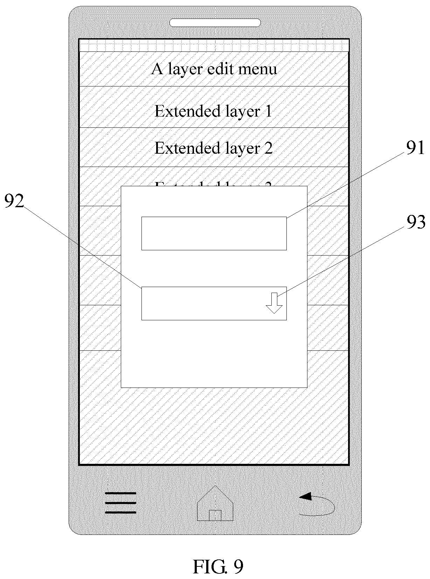

If the user clicks the "adding extended layers" option in the extended layer edit menu, a setting dialog box of the extended layers will be displayed on the user interface, as shown in Fig. 9. The user can input the name of a newly added extended layer in an input box 91, and can further select the background, the icon display style, and so on corresponding to the extended layer to be added through a pull-down menu arrow 93 in a check box 92. It can be seen that extended layers may have different backgrounds and icon display styles, which enriches users' experience.

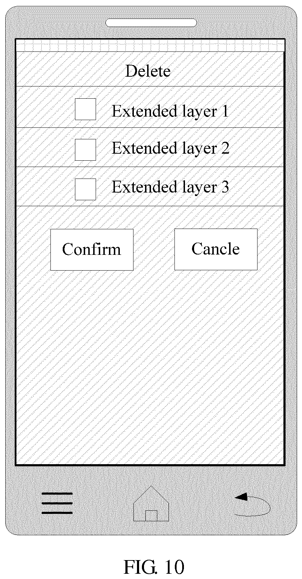

If the user clicks the "deleting extended layers" option in the extended layer edit menu, it will enter into a state of deleting extended layers, as shown in fig. 10. The user can select one or more extended layers to be deleted through checking, and then click "confirm" option. In this embodiment, the base layer is set to not allow the user to delete.

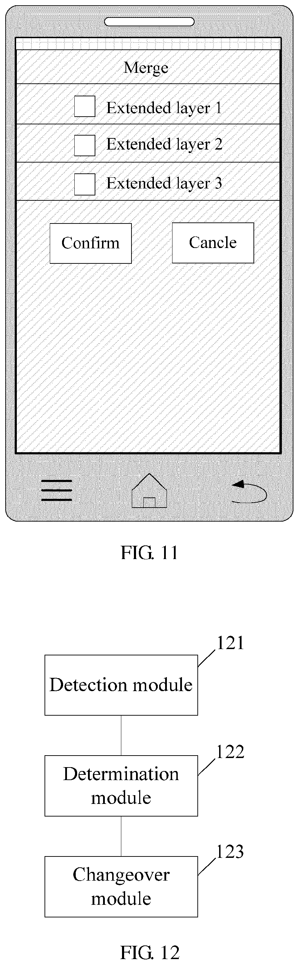

If the user clicks the "merging extended layers" option in the extended layer edit menu, it will enter into a state of merging extended layers, as shown in fig. 11. The user can select two or more extended layers to be merged through checking, and then click "confirm" option. At this time, a setting dialog box of the extended layers is displayed on the user interface, which is the same as shown in fig. 9. The user can name the new extended layer after merging in this dialog box, and can further select the background, icon display style and so on corresponding to this extended layer.

If the user clicks a certain extended layer and lasts for a set time, a setting dialog box of the extended layer is displayed on the user interface, as shown in fig. 9. The user can change the name, background, the icon display style and so on of the selected extended layer in this dialog box.

What have been given in the above schematic diagrams illustrating user interfaces are only examples, menus and dialog boxes also can have other arrangement modes, and options in the menus and dialog boxes can have other arrangement modes as well.

One application example of the embodiments of the disclosure will be provided below.

It is assumed that in addition to a base layer, there are established four extended layers, which respectively are "no network theme layer", "internet or web surfing theme layer", "working theme layer" and "old men concision theme layer".

Wherein, the "no network theme layer" includes icons of local game application programs and icons of local electronic book application programs, the "internet or web surfing theme layer" includes icons of online game application programs, icons of webpage access application programs and icons of instant messaging application programs, the "working theme layer" includes icons of working related document application programs and the "old men concision theme layer" includes icons of dialing application programs, icons of short message sending application programs and icons of photographing application programs.

Users can toggle to the "no network theme layer" at a location where there is no network such as an elevator, or the like, so as to use all kinds of application programs which do not require a network connection conveniently. When the electronic device is provided to elders for their use, toggling to the "old men concision theme layer" can be made, so as to facilitate the usage of old men.

When users toggle to a certain layer, they can further delete or add the icons of application programs from or to this layer through a touch gesture, or lock the currently displayed layer, and further, they can perform editing operations to the layer after entrance into the layer editing state.

### Embodiment 6

Fig. 12 is a structurally schematic diagram showing a user interface management device in Embodiment 6 of the embodiments of the disclosure. The device includes: a detection module 121, a determination module 122 and a changeover module 123.

The detection module 121 is used to detect a contact with a touch screen.

The determination module 122 is used to determine a gesture matching with the contact.

The changeover module 123 is used to change layers that are displayed on the user interface over when the contact matches with a predetermined layer changeover gesture.

Different layers include icons of application programs that are not all the same.

As an optional implementation, the layers include a base layer and extended layers, the base layer includes icons of all application programs, and different extended layers include icons of application programs of different kinds. Here, the kinds are "no network", "working" and "internet or web surfing" etc., which are user-defined.

As an optional implementation, the changeover module 123 includes: a first processing sub-module and a first changeover execution sub-module.

The first processing sub-module is used to display a list of selectable layers on the user interface and acknowledge the user's selection of one of layers, when the contact matches with the predetermined layer changeover gesture.

The first changeover execution sub-module is used to display the layer selected by the user on the user interface.

As another optional implementation, the changeover module 123 includes: a second processing sub-module and a second changeover execution module.

The second processing sub-module is used to determine the next layer of the layer currently displayed on the user interface according to a set order when the contact matches with the predetermined layer changeover gesture.

The second changeover execution module is used to display the determined layer on the user interface.

### Embodiment 7

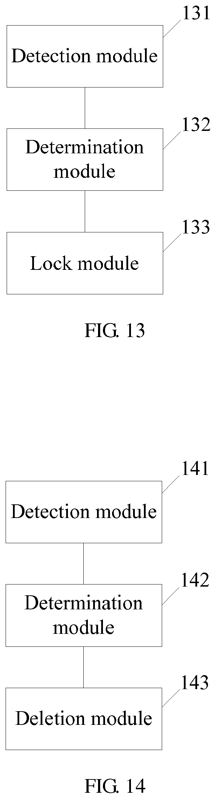

Fig. 13 is a structurally schematic diagram showing a user interface management device in Embodiment 7 of the embodiments of the disclosure. The device includes: a detection module 131, a determination module 132 and a lock module 133.

The detection module 131 is used to detect a contact with a touch screen.

The determination module 132 is used to determine a gesture matching with the contact.

The lock module 133 is used to lock the layer currently displayed on the user interface when the contact matches with a predetermined layer lock gesture.

Different layers include icons of application programs that are not all the same.

As an optional implementation, the layers include a base layer and extended layers, the base layer includes icons of all application programs, and different extended layers include icons of application programs of different kinds. Here, the kinds are "no network", "working", "internet or web surfing" and other kinds, which are user-defined.

### Embodiment 8

Fig. 14 is a structurally schematic diagram showing a user interface management device in Embodiment 8 of the embodiments of the disclosure. The device includes: a detection module 141, a determination module 142 and a deletion module 143.

The detection module 141 is used to detect a contact with a touch screen.

The determination module 142 is used to determine a gesture matching with the contact.

The deletion module 143 is used to delete the icon of an application program corresponding to the contact in the layer currently displayed on the user interface when the contact matches with a predetermined application program deletion gesture.

Different layers include icons of application programs that are not all the same.

As an optional implementation, the layers include a base layer and extended layers, the base layer includes icons of all application programs, and different extended layers include icons of application programs of different kinds. Here, the kinds are "no network", "working" and "internet or web surfing" etc., which are user-defined.

As an optional implementation, the deletion module 143 includes: a determination sub-module and a deletion execution sub-module.

The determination sub-module is used to determine type of the layer currently displayed on the user interface.

The deletion execution sub-module is used to uninstall an application program corresponding to the contact and delete the icon of the application program corresponding to the contact from each layer when that is currently displayed on the user interface is a base layer; and to delete the icon of an application program corresponding to the contact from the currently displayed extended layer, when that is currently displayed on the user interface is an extended layer.

Further, the deletion execution sub-module is configured to display, when that is currently displayed on the user interface is an extended layer, a prompt for a deletion mode on the user interface firstly, and then according to the user's selection, delete the icon of an application program corresponding to the contact from the currently displayed extended layer, or uninstall an application program corresponding to the contact and delete the icon of the application program corresponding to the contact from each layer.

### Embodiment 9

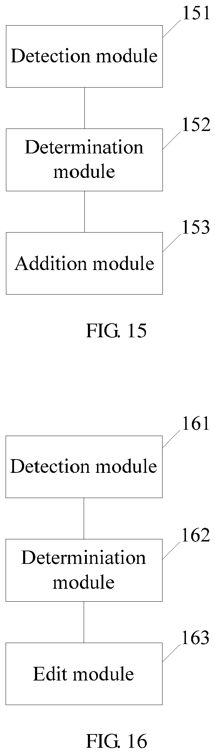

Fig. 15 is a structurally schematic diagram showing a user interface management device in Embodiment 9 of the embodiments of the disclosure. The device includes: a detection module 151, a determination module 152 and an addition module 153.

The detection module 151 is used to detect a contact with a touch screen.

The determination module 152 is used to determine a gesture matching with the contact.

The addition module 153 is used to add the icon of an application program to the layer currently displayed on the user interface when the contact matches with a predetermined application program addition gesture.

Different layers include icons of application programs that are not all the same.

As an optional implementation, the layers include a base layer and extended layers, the base layer includes icons of all application programs, and different extended layers include icons of application programs of different kinds. Here, the kinds are "no network", "working" and "internet or web surfing" etc., which are user-defined.

As an optional implementation, the addition module 153 includes: a display sub-module and an addition execution sub-module.

The display sub-module is used to display a list of selectable application programs on the user interface.

The addition execution sub-module is used to acknowledge the user's choice of one or more application programs and add the icon(s) of the application program(s) selected by the user to the layer currently displayed on the user interface.

### Embodiment 10

Fig. 16 is a structurally schematic diagram showing a user interface management device in Embodiment 10 of the embodiments of the disclosure. The device includes: a detection module 161, a determination module 162 and an edit module 163.

The detection module 161 is used to detect a contact with a touch screen.

The determination module 162 is used determine a gesture matching with the contact.

The edit module 163 is used to control the user interface to enter into a layer edit state, receive an edit instruction inputted by a user in the edit state and perform an edit operation to layers, when the contact matches with a predetermined layer edit gesture.

Different layers include icons of application programs that are not all the same.

As an optional implementation, the layers include a base layer and extended layers, the base layer includes icons of all application programs, and different extended layers include icons of application programs of different kinds. Here, the kinds are "no network", "working" and "internet or web surfing" etc., which are user-defined.

As an optional implementation, the edit operation includes at least one of adding extended layers, deleting extended layers, merging two or more extended layers, changing name of extended layers, changing background of extended layers and/or icon style of application programs.

### Embodiment 11

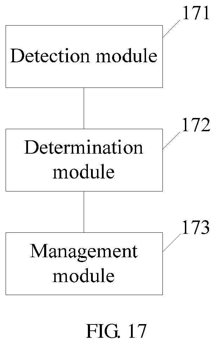

Fig. 17 is a structurally schematic diagram showing a user interface management device in Embodiment 11 of the embodiments of the disclosure. The device includes: a detection module 171, a determination module 172 and a management module 173.

The detection module 171 is used to detect a contact with a touch screen.

The determination module 172 is used to determine a gesture matching with the contact.

The management module 173 is used to change layers that are displayed on the user interface over when the contact matches with a predetermined layer changeover gesture, to lock the layer currently displayed on the user interface when the contact matches with a predetermined layer lock gesture, to delete the icon of an application program corresponding to the contact in the layer currently displayed on the user interface when the contact matches with a predetermined application program deletion gesture, to add the icon of an application program to the layer currently displayed on the user interface when the contact matches with a predetermined application program addition gesture, and to enter into a layer edit state, receive an edit instruction inputted by a user in the edit state and perform an edit operation to layers when the contact matches with a predetermined layer edit gesture.

Different layers include icons of application programs that are not all the same.

As an optional implementation, the layers include a base layer and extended layers, the base layer includes icons of all application programs, and different extended layers include icons of application programs of different kinds. Here, the kinds are "no network", "working", "internet or web surfing" and other user-defined kinds.

With respect to the user interface management devices in the above Embodiment 6 to Embodiment 11, the specific modes to perform operations for individual modules inside them have been introduced in detail in the foregoing methods, so they are no longer repeated here.

According to an embodiment of the disclosure, there is further provided a device, including:
one or more processors;
a memory; and,
one or more programs, the one or more programs being stored in the memory and configured to be performed by the one or more processors, wherein, the one or more programs have the follow functions:
detecting a contact with a touch screen;
determining a predetermined gesture that matches with the contact; and,
changing layers that are displayed on the user interface over if the contact matches with a predetermined layer changeover gesture, wherein, different layers include icons of application programs that are not all the same.

According to an embodiment of the disclosure, there is further provided a second device, including:
one or more processors;
a memory; and,
one or more programs, the one or more programs being stored in the memory and configured to be performed by the one or more processors, wherein, the one or more programs have the follow functions:
detecting a contact with a touch screen;
determining a predetermined gesture that matches with the contact; and,
locking the layer currently displayed on the user interface if the contact matches with a predetermined layer lock gesture, wherein, different layers include icons of application programs that are not all the same.

According to an embodiment of the disclosure, there is further provided a third device, including:
one or more processors;
a memory; and,
one or more programs, the one or more programs being stored in the memory and configured to be performed by the one or more processors, wherein, the one or more programs have the follow functions:
detecting a contact with a touch screen;
determining a predetermined gesture that matches with the contact; and,
deleting the icon of an application program corresponding to the contact in the layer currently displayed on the user interface if the contact matches with a predetermined layer deletion gesture, wherein, different layers include icons of application programs that are not all the same.

According to an embodiment of the disclosure, there is further provided a fourth device, including:
one or more processors;
a memory; and,
one or more programs, the one or more programs being stored in the memory and configured to be performed by the one or more processors, wherein, the one or more programs have the follow functions:
detecting a contact with a touch screen;
determining a predetermined gesture that matches with the contact; and,
adding the icon of an application program corresponding to the contact to the layer currently displayed on the user interface if the contact matches with a predetermined layer addition gesture, wherein, different layers include icons of application programs that are not all the same.

According to an embodiment of the disclosure, there is further provided a fifth device, including:
one or more processors;
a memory; and,
one or more programs, the one or more programs being stored in the memory and configured to be performed by the one or more processors, wherein, the one or more programs have the follow functions:
detecting a contact with a touch screen;
determining a predetermined gesture that matches with the contact; and,
entering into a layer edit state if the contact matches with a predetermined layer edit gesture;
receiving an edit instruction inputted by a user in the edition state and performing an edit operation to layers,
wherein, different layers include icons of application programs that are not all the same.

According to an embodiment of the disclosure, there is further provided a sixth device, including:
one or more processors;
a memory; and,
one or more programs, the one or more programs being stored in the memory and configured to be performed by the one or more processors, wherein, the one or more programs have the follow functions:
detecting a contact with a touch screen;
determining a predetermined gesture that matches with the contact;
changing layers that are displayed on the user interface over if the contact matches with a predetermined layer changeover gesture;
locking the layer currently displayed on the user interface if the contact matches with a predetermined layer lock gesture;
deleting the icon of an application program corresponding to the contact in the layer currently displayed on the user interface if the contact matches with a predetermined application program deletion gesture;
adding the icon of an application program to the layer currently displayed on the user interface if the contact matches with a predetermined application program addition gesture;
entering into a layer editing state if the contact matches with a predetermined layer edit gesture, receiving an editing instruction inputted by a user in the editing state and performing an editing operation to layers;
wherein, different layers include icons of application programs that are not all the same.

According to the embodiment, there is further provided a nonvolatile readable storage medium having one or more programs stored therein, which can, when it or they is/are applied to a device with a touch screen, let the device perform instructions in the following steps:
detecting a contact with a touch screen;
determining a predetermined gesture that matches with the contact; and,
changing layers that are displayed on the user interface over if the contact matches with a predetermined layer changeover gesture,
wherein, different layers include icons of application programs that are not all the same.

According to an embodiment of the disclosure, there is provided a second nonvolatile readable storage medium having one or more programs stored therein, which can, when it or they is/are applied to a device with a touch screen, let the device perform instructions in the following steps:
detecting a contact with a touch screen;
determining a predetermined gesture that matches with the contact; and,
locking the layer currently displayed on the user interface if the contact matches with a predetermined layer lock gesture,
wherein, different layers include icons of application programs that are not all the same.

According to an embodiment of the disclosure, there is provided a third nonvolatile readable storage medium having one or more programs stored therein, which can, when it or they is/are applied to a device with a touch screen, let the device perform instructions in the following steps:
detecting a contact with a touch screen;
determining a predetermined gesture that matches with the contact; and,
deleting the icon of an application program corresponding to the contact in the layer currently displayed on the user interface if the contact matches with a predetermined application program deletion gesture,
wherein, different layers include icons of application programs that are not all the same.

According to an embodiment of the disclosure, there is provided a fourth nonvolatile readable storage medium having one or more programs stored therein, which can, when it or they is/are applied to a device with a touch screen, let the device perform instructions in the following steps:
detecting a contact with a touch screen;
determining a predetermined gesture that matches with the contact; and,
adding the icon of an application program to the layer currently displayed on the user interface if the contact matches with a predetermined application program addition gesture,
wherein, different layers include icons of application programs that are not all the same.

According to an embodiment of the disclosure, there is provided a fifth nonvolatile readable storage medium having one or more programs stored therein, which can, when it or they is/are applied to a device with a touch screen, let the device perform instructions in the following steps:
detecting a contact with a touch screen;
determining a predetermined gesture that matches with the contact;
entering into a layer edit state if the contact matches with a predetermined layer edit gesture;
receiving an edit instruction inputted by a user in the edition state and performing an edit operation to layers;
wherein, different layers include icons of application programs that are not all the same.

According to an embodiment of the disclosure, there is provided a sixth nonvolatile readable storage medium having one or more programs stored therein, which can, when it or they is/are applied to a device with a touch screen, let the device perform instructions in the following steps:
detecting a contact with a touch screen;
determining a predetermined gesture that matches with the contact;
changing layers that are displayed on the user interface over if the contact matches with a predetermined layer changeover gesture;
locking the layer currently displayed on the user interface if the contact matches with a predetermined layer lock gesture;
deleting the icon of an application program corresponding to the contact in the layer currently displayed on the user interface if the contact matches with a predetermined application program deletion gesture;
adding the icon of an application program to the layer currently displayed on the user interface if the contact matches with a predetermined application program addition gesture;
entering into a layer editing state if the contact matches with a predetermined layer edit gesture, receiving an editing instruction inputted by a user in the editing state and performing an editing operation to layers;
wherein, different layers include icons of application programs that are not all the same.

With respect to functions and steps involved in the devices and nonvolatile readable storage mediums provided by the above embodiments of the disclosure, the specific implementations have been introduced in detail in the foregoing methods, so they are no longer repeated here.

It can be appreciated by those ordinarily skilled in the art that, achievement of all or part of steps in the above embodiments can be accomplished by hardware, or can also be accomplished by instructing the related hardware with programs, the programs can be stored in a computer readable storage medium, and the storage medium mentioned above may be a read-only memory, a disk, an optical disk or the like.

Descriptions made above are only exemplary embodiments; and are not used to limit the embodiments of the disclosure.

## Claims

1. A method for managing a user interface, comprising:
detecting (11) a contact with a touch screen;
determining (12) a predetermined gesture that matches with the contact; and
if the contact matches with a predetermined layer changeover gesture, changing over the layer displayed on the user interface (13),
wherein different layers comprise icons of application programs that are not all the same; the method further comprising:
if the contact matches with a predetermined application program deletion gesture, deleting (33) the icon of an application program corresponding to the contact in a layer currently displayed on the user interface;
wherein:
if the user interface is currently displaying a base layer, i.e. a first layer by default, the step of deleting the icon of an application program comprises uninstalling the application program from the electronic device; and
if the user interface is currently displaying an extended layer, the icon of the application program is deleted from the currently displayed extended layer, but the application program still exists in the electronic device.

2. A method for managing a user interface according to claim 1, further comprising:
if the user interface is currently displaying an extended layer, before the icon of the application program is deleted from the currently displayed extended layer, displaying a prompt to the user suggesting that the user can uninstall the application program or delete the icon of the application program, according to a selection of the user.

3. A method for managing a user interface according to claim 1 or 2, further comprising:
if the contact matches with a predetermined layer lock gesture, locking (63) a layer currently displayed on the user interface.

4. A method for managing a user interface according to claims 1, 2 or 3, further comprising:
if the contact matches with a predetermined application program addition gesture, adding (53) the icon of an application program to a layer currently displayed on the user interface

5. A method for managing a user interface according to claims 1, 2, 3 or 4, further comprising:
if the contact matches with a predetermined layer edit gesture, entering (73) into a layer edit state,
receiving (74) an edit instruction inputted by a user in the edit state and performing an edit operation to layers.

6. A device for managing a user interface, comprising:
a detection module (121), configured to detect a contact with a touch screen;
a determination module (122), configured to determine a gesture matching with the contact;
a changeover module (123), configured to change layer displayed on the user interface over if the contact matches with a predetermined layer changeover gesture, wherein different layers comprise icons of application programs that are not all the same; and
a deletion module (143), configured to delete the icon of an application program corresponding to the contact in the currently displayed layer on the user interface if the contact matches with a predetermined application program deletion gesture;
wherein:
if the user interface is currently displaying a base layer, i.e. a first layer by default, the deletion module (143) is configured to uninstall the application program from the electronic device; and
if the user interface is currently displaying an extended layer, the deletion module (143) is configured to delete the icon of the application program from the currently displayed extended layer, the application program still existing in the electronic device.

7. A device according to claim 6, wherein:
if the user interface is currently displaying an extended layer, before the deletion module (143) deletes the icon of the application program from the currently displayed extended layer, the device is configured to display a prompt to the user suggesting that the user can uninstall the application program or delete the icon of the application program, according to a selection of the user.

8. A device according to claim 6 or 7, wherein, the changeover module (123) comprises:
a first processing sub-module, configured to display a list of selectable layers on the user interface, and acknowledge the user's choice of one of the layers, if the contact matches with the predetermined layer changeover gesture; and
a first changeover execution sub-module, configured to display the layer selected by the user on the user interface.

9. A device according to any one of claims 6 to 8, wherein, the changeover module (123) comprises:
a second processing sub-module, configured to determine the next layer of the currently displayed layer on the user interface according to a set order if the contact matches with the predetermined layer changeover gesture; and
a second changeover execution sub-module, configured to display the determined layer on the user interface.

10. A device according to any of claims 6 to 9, wherein the layers comprise a base layer and extended layers, the base layer comprises icons of all application programs, and different extended layers comprise icons of application programs of different kinds.

11. A device for managing a user interface according to any of claims 6 to 10, further comprising:
a lock module (133), configured to lock a layer currently displayed on the user interface if the contact matches with a predetermined layer lock gesture.

12. A device for managing a user interface according to any of claims 6 to 11, further comprising:
an addition module (153), configured to add the icon of an application program to a layer currently displayed on the user interface if the contact matches with a predetermined application program addition gesture.

13. A device for managing a user interface according to any of claims 6 to 12, further comprising:
an edit module (163), configured to control, if the contact matches with a predetermined layer edit gesture, the user interface to enter into a layer edit state; and to receive an edit instruction inputted by a user in the edit state and perform an edit operation to layers.

14. A program product having stored therein instructions that, when executed by the device according to any one of claims 6 to 13, performs the method of any of claims 1 to 5.

15. A computer program, which when executed on a processor, performs the method according to any of claims 1 to 5.

## Patentansprüche

1. Verfahren zum Verwalten einer Benutzeroberfläche, das Folgendes beinhaltet:
Erkennen (11) eines Kontakts mit einem Touchscreen;
Bestimmen (12) einer vorbestimmten Geste, die mit dem Kontakt übereinstimmt; und
Umschalten, wenn der Kontakt mit einer vorbestimmten Schichtenumschaltgeste übereinstimmt, der auf der Benutzeroberfläche (13) angezeigten Schicht,
wobei unterschiedliche Schichten Symbole von Anwendungsprogrammen umfassen, die nicht alle gleich sind; wobei das Verfahren ferner Folgendes beinhaltet:
Löschen (33), wenn der Kontakt mit einer vorbestimmten Anwendungsprogrammlöschgeste übereinstimmt, des Symbols eines Anwendungsprogramms entsprechend dem Kontakt in einer aktuell auf der Benutzeroberfläche angezeigten Schicht;
wobei:
wenn die Benutzeroberfläche aktuell eine Basisschicht anzeigt, d.h. vorgabemäßig eine erste Schicht, der Schritt des Löschens des Symbols eines Anwendungsprogramms das Deinstallieren des Anwendungsprogramms von dem elektronischen Gerät beinhaltet; und
wenn die Benutzeroberfläche aktuell eine erweiterte Schicht anzeigt, das Symbol des Anwendungsprogramms von der aktuell angezeigten erweiterten Schicht gelöscht wird, aber das Anwendungsprogramm weiter im elektronischen Gerät bleibt.

2. Verfahren zum Verwalten einer Benutzeroberfläche nach Anspruch 1, das ferner Folgendes beinhaltet:
Anzeigen, wenn die Benutzeroberfläche aktuell eine erweiterte Schicht anzeigt, bevor das Symbol des Anwendungsprogramms von der aktuell angezeigten erweiterten Schicht gelöscht wird, einer Aufforderung an den Benutzer, die darauf hinweist, dass der Benutzer das Anwendungsprogramm deinstallieren oder das Symbol des Anwendungsprogramms löschen kann, je nach einer Auswahl des Benutzers.

3. Verfahren zum Verwalten einer Benutzeroberfläche nach Anspruch 1 oder 2, das ferner Folgendes beinhaltet:
Sperren (63), wenn der Kontakt mit einer vorbestimmten Schichtsperrgeste übereinstimmt, einer aktuell auf der Benutzeroberfläche angezeigten Schicht.

4. Verfahren zum Verwalten einer Benutzeroberfläche nach Anspruch 1, 2 oder 3, das ferner Folgendes beinhaltet:
Hinzufügen (53), wenn der Kontakt mit einer vorbestimmten Anwendungsprogrammhinzufügungsgeste übereinstimmt, des Symbols eines Anwendungsprogramms zu einer aktuell auf der Benutzeroberfläche angezeigten Schicht.

5. Verfahren zum Verwalten einer Benutzeroberfläche nach Anspruch 1, 2, 3 oder 4, das ferner Folgendes beinhaltet:
Eintreten (73), wenn der Kontakt mit einer vorbestimmten Schichteditiergeste übereinstimmt, in einen Schichteditierzustand,
Empfangen (74) eines von einem Benutzer im Editierzustand eingegebenen Editierbefehls und Durchführen eines Editiervorgangs an Schichten.

6. Gerät zum Verwalten einer Benutzeroberfläche, das Folgendes umfasst:
ein Erkennungsmodul (121), konfiguriert zum Erkennen eines Kontakts mit einem Touchscreen;
ein Bestimmungsmodul (122), konfiguriert zum Bestimmen einer mit dem Kontakt übereinstimmenden Geste;
ein Umschaltmodul (123), konfiguriert zum Umschalten einer auf der Benutzeroberfläche angezeigten Schicht, wenn der Kontakt mit einer vorbestimmten Schichtumschaltgeste übereinstimmt, wobei unterschiedliche Schichten Symbole von Anwendungsprogrammen umfassen, die nicht alle gleich sind; und
ein Löschmodul (143), konfiguriert zum Löschen des Symbols eines Anwendungsprogramms entsprechend dem Kontakt in der aktuell angezeigten Schicht auf der Benutzeroberfläche, wenn der Kontakt mit einer vorbestimmten Anwendungsprogrammlöschgeste übereinstimmt;
wobei:
wenn die Benutzeroberfläche aktuell eine Basisschicht anzeigt, d.h. vorgabemäßig eine erste Schicht, das Löschmodul (143) zum Deinstallieren des Anwendungsprogramms von dem elektronischen Gerät konfiguriert ist; und
wenn die Benutzeroberfläche aktuell eine erweiterte Schicht anzeigt, das Löschmodul (143) zum Löschen des Symbols des Anwendungsprogramms von der aktuell angezeigten erweiterten Schicht konfiguriert ist, wobei das Anwendungsprogramm weiterhin in dem elektronischen Gerät existiert.

7. Gerät nach Anspruch 6, wobei:
wenn die Benutzeroberfläche aktuell eine erweiterte Schicht anzeigt, bevor das Löschmodul (143) das Symbol des Anwendungsprogramms von der aktuell angezeigten erweiterten Schicht löscht, das Gerät zum Anzeigen einer Aufforderung an den Benutzer konfiguriert ist, die darauf hinweist, dass der Benutzer das Anwendungsprogramm deinstallieren oder das Symbol des Anwendungsprogramms löschen kann, je nach einer Auswahl des Benutzers.

8. Gerät nach Anspruch 6 oder 7, wobei das Umschaltmodul (123) Folgendes umfasst:
ein erstes Verarbeitungssubmodul, konfiguriert zum Anzeigen einer Liste von wählbaren Schichten auf der Benutzeroberfläche und zum Bestätigen der Wahl des Benutzers von einer der Schichten, wenn der Kontakt mit einer vorbestimmten Schichtumschaltgeste übereinstimmt; und
ein erstes Umschaltausführungssubmodul, konfiguriert zum Anzeigen der vom Benutzer gewählten Schicht auf der Benutzeroberfläche.

9. Gerät nach einem der Ansprüche 6 bis 8, wobei das Umschaltmodul (123) Folgendes umfasst:
ein zweites Verarbeitungssubmodul, konfiguriert zum Bestimmen der nächsten Schicht der aktuell angezeigten Schicht auf der Benutzeroberfläche gemäß einer festgelegten Reihenfolge, wenn der Kontakt mit der vorbestimmten Schichtumschaltgeste übereinstimmt; und
ein zweites Umschaltausführungssubmodul, konfiguriert zum Anzeigen der bestimmten Schicht auf der Benutzeroberfläche.

10. Gerät nach einem der Ansprüche 6 bis 9, wobei die Schichten eine Basisschicht und erweiterte Schichten umfassen, wobei die Basisschicht Symbole aller Anwendungsprogramme umfasst und unterschiedliche erweiterte Schichten Symbole von Anwendungsprogrammen unterschiedlicher Arten umfassen.

11. Gerät zum Verwalten einer Benutzeroberfläche nach einem der Ansprüche 6 bis 10, das ferner Folgendes umfasst:
ein Sperrmodul (133), konfiguriert zum Sperren einer aktuell auf der Benutzeroberfläche angezeigten Schicht, wenn der Kontakt mit einer vorbestimmten Schichtsperrgeste übereinstimmt.

12. Gerät zum Verwalten einer Benutzeroberfläche nach einem der Ansprüche 6 bis 11, das ferner Folgendes umfasst:
ein Hinzufügungsmodul (153), konfiguriert zum Hinzufügen des Symbols eines Anwendungsprogramms zu einer aktuell auf der Benutzeroberfläche angezeigten Schicht, wenn der Kontakt mit einer vorbestimmten Anwendungsprogrammhinzufügungsgeste übereinstimmt.

13. Gerät zum Verwalten einer Benutzeroberfläche nach einem der Ansprüche 6 bis 12, das ferner Folgendes umfasst:
ein Editiermodul (163), konfiguriert zum Steuern, wenn der Kontakt mit einer vorbestimmten Schichteditiergeste übereinstimmt, der Benutzeroberfläche zum Eintreten in einen Schichteditierzustand; und zum Empfangen eines von einem Benutzer im Editierzustand eingegebenen Befehls und zum Durchführen eines Editiervorgangs an Schichten.

14. Programmprodukt, auf dem Befehle gespeichert sind, die bei Ausführung durch das Gerät nach einem der Ansprüche 6 bis 13 das Verfahren nach einem der Ansprüche 1 bis 5 durchführt.

15. Computerprogramm, das bei Ausführung auf einem Prozessor das Verfahren nach einem der Ansprüche 1 bis 5 durchführt.

## Revendications

1. Procédé de gestion d'une interface utilisateur, comprenant :
la détection (11) d'un contact avec un écran tactile ;
la détermination (12) d'un geste prédéterminé qui correspond au contact ; et
si le contact correspond à un geste de permutation de couche prédéterminé, la permutation de la couche affichée sur l'interface utilisateur (13),
dans lequel différentes couches comprennent des icônes de programmes d'applications qui ne sont pas tous les mêmes ; le procédé comprenant en outre :
si le contact correspond à un geste de suppression de programme d'application prédéterminé, la suppression (33) de l'icône d'un programme d'application correspondant au contact dans une couche présentement affichée sur l'interface utilisateur ;
dans lequel :
si l'interface utilisateur affiche présentement une couche de base, c.-à-d. une première couche par défaut, l'étape de suppression de l'icône d'un programme d'application comprend la désinstallation du programme d'application sur le dispositif électronique ; et
si l'interface utilisateur affiche présentement une couche étendue, l'icône du programme d'application est supprimée de la couche étendue présentement affichée, mais le programme d'application existe toujours dans le dispositif électronique.

2. Procédé de gestion d'une interface utilisateur selon la revendication 1, comprenant en outre :
si l'interface utilisateur affiche présentement une couche étendue, avant la suppression de l'icône du programme d'application de la couche étendue présentement affichée, l'affichage d'une invite à l'utilisateur suggérant à l'utilisateur qu'il peut désinstaller le programme d'application ou supprimer l'icône du programme d'application, selon une sélection de l'utilisateur.

3. Procédé de gestion d'une interface utilisateur selon la revendication 1 ou 2, comprenant en outre :
si le contact correspond à un geste de verrouillage de couche prédéterminé, le verrouillage (63) d'une couche présentement affichée sur l'interface utilisateur.

4. Procédé de gestion d'une interface utilisateur selon les revendications 1, 2 ou 3, comprenant en outre :
si le contact correspond à un geste d'ajout de programme d'application prédéterminé, l'ajout (53) de l'icône d'un programme d'application à une couche présentement affichée sur l'interface utilisateur.

5. Procédé de gestion d'une interface utilisateur selon les revendications 1, 2, 3 ou 4, comprenant en outre :
si le contact correspond à un geste de modification de couche prédéterminé, le passage (73) à un état de modification de couche,
la réception (74) d'une instruction de modification entrée par un utilisateur dans l'état de modification et la réalisation d'une opération de modification de couches.

6. Dispositif de gestion d'une interface utilisateur, comprenant :
un module de détection (121), configuré pour détecter un contact avec un écran tactile ;
un module de détermination (122), configuré pour déterminer un geste correspondant au contact ;
un module de permutation (123), configuré pour permuter la couche affichée sur l'interface utilisateur si le contact correspond à un geste de permutation de couche prédéterminé, dans lequel différentes couches comprennent des icônes de programmes d'applications qui ne sont pas tous les mêmes ; et
un module de suppression (143), configuré pour supprimer l'icône d'un programme d'application correspondant au contact dans la couche présentement affichée sur l'interface utilisateur si le contact correspond à un geste de suppression de programme d'application prédéterminé ;
dans lequel :
si l'interface utilisateur affiche présentement une couche de base, c.-à-d. une première couche par défaut, le module de suppression (143) est configuré pour désinstaller le programme d'application sur le dispositif électronique ; et
si l'interface utilisateur affiche présentement une couche étendue, le module de suppression (143) est configuré pour supprimer l'icône du programme d'application de la couche étendue présentement affichée, le programme d'application existant toujours dans le dispositif électronique.

7. Dispositif selon la revendication 6, le dispositif étant configuré pour :
si l'interface utilisateur affiche présentement une couche étendue, avant que le module de suppression (143) supprime l'icône du programme d'application de la couche étendue présentement affichée, afficher une invite à l'utilisateur suggérant que l'utilisateur peut désinstaller ou supprimer le programme d'application, selon une sélection de l'utilisateur.

8. Dispositif selon la revendication 6 ou 7, dans lequel, le module de permutation (123) comprend :
un premier sous-module de traitement, configuré pour afficher une liste de couches sélectionnables sur l'interface utilisateur, et acquitter le choix de l'une des couches par l'utilisateur, si le contact correspond au geste de permutation de couche prédéterminé ; et
un premier sous-module d'exécution de permutation, configuré pour afficher la couche sélectionnée par l'utilisateur sur l'interface utilisateur.

9. Dispositif selon l'une quelconque des revendications 6 à 8, dans lequel le module de permutation (123) comprend :
un second sous-module de traitement, configuré pour déterminer la couche suivante de la couche présentement affichée sur l'interface utilisateur selon un ordre établi si le contact correspond au geste de permutation de couche prédéterminé ; et
un second sous-module d'exécution de permutation, configuré pour afficher la couche déterminée sur l'interface utilisateur.

10. Dispositif selon l'une quelconque des revendications 6 à 9, dans lequel les couches comprennent une couche de base et des couches étendues, la couche de base comprend des icônes de tous les programmes d'application, et différentes couches étendues comprennent des icônes de programmes d'application de différents types.

11. Dispositif de gestion d'une interface utilisateur selon l'une quelconque des revendications 6 à 10, comprenant en outre :
un module de verrouillage (133), configuré pour verrouiller une couche présentement affichée sur l'interface utilisateur si le contact correspond à un geste de verrouillage de couche prédéterminé.

12. Dispositif de gestion d'une interface utilisateur selon l'une quelconque des revendications 6 à 11, comprenant en outre :
un module d'ajout (153), configuré pour ajouter l'icône d'un programme d'application à une couche présentement affichée sur l'interface utilisateur si le contact correspond à un geste d'ajout de programme d'application prédéterminé.

13. Dispositif de gestion d'une interface utilisateur selon l'une quelconque des revendications 6 à 12, comprenant en outre :
un module de modification (163), configuré pour commander, si le contact correspond à un geste de modification de couche prédéterminé, l'interface utilisateur afin de passer dans un état de modification de couche ; et recevoir une instruction de modification entrée par un utilisateur dans l'état de modification et réaliser une opération de modification de couches.

14. Produit-programme sur lequel sont mémorisées des instructions qui, à leur exécution par le dispositif selon l'une quelconque des revendications 6 à 13, réalisent le procédé selon l'une quelconque des revendications 1 à 5.

15. Programme informatique qui, à son exécution sur un processeur, réalise le procédé selon l'une quelconque des revendications 1 à 5.
